# FASCICULE DE BREVET EUROPEEN

(11) **EP 2 001 710 B1**
(45) Date de publication et mention de la délivrance du brevet: **10.11.2010**
(21) Numéro de dépôt: 07731843.4
(22) Date de dépôt: 29.03.2007
(51) Int. Cl.: B60P 1/02, B66F 1/04

(54) **VEHICULE ELEVATEUR POUR DES PERSONNES TRAVAILLANT EN HAUTEUR**
HUBFAHRZEUG FÜR IN GROSSEN HÖHEN ARBEITENDE PERSONEN
LIFTING VEHICLE FOR PERSONS WORKING AT HEIGHT

(30) Priorité: 31.03.2006 FR 0651150
(43) Date de publication de la demande: 17.12.2008
(73) Titulaire: Prezioso, 38370 St Clair du Rhone (FR)
(72) Inventeur: BOUVIER, Alain, F-38370 Saint Clair Du Rhone (FR)
(74) Mandataire: Thibault, Jean-Marc
(86) Numéro de dépôt international: PCT/FR2007/051039
(87) Numéro de publication internationale: WO 2007/113441

(56) Documents cités:
- EP-A- 1 348 626
- DE-A1- 2 227 370
- FR-A1- 2 705 630
- JP-A- 4 325 384
- US-A- 5 082 085
- US-A- 5 525 019

## Description

L'objet de la présente invention concerne le domaine technique des véhicules motorisés ou non, adaptés pour assurer l'élévation de personnes travaillant en hauteur.

L'état de la technique a proposé de nombreuses solutions pour assurer l'élévation de personnes devant travailler en hauteur.

Il est connu ainsi d'équiper un véhicule, d'une nacelle élévatrice présentant une plateforme de travail et pourvue de moyens moteurs d'élévation du type par exemple à bras articulé comme décrit par le brevet US 5 082 085 ou à compas comme décrit par la demande de brevet EP 1 348 626. Un tel véhicule est équipé de moyens de stabilisation ou de béquillage qui sont mis en oeuvre lorsqu'intervient l'opération d'accès à la zone de travail. Un tel véhicule offre ainsi la possibilité dans de bonnes conditions de sécurité, à une, voire à deux personnes, d'accéder à une aire de travail située en hauteur.

Toutefois, il doit être considéré que de tels engins ne sont pas adaptés pour permettre la manipulation et la pose en hauteur, d'objets lourds et/ou encombrants. Tel est le cas notamment pour la pose de plaques de revêtement destinées à être fixées sur la paroi intérieure d'un tunnel. La pose de ces plaques nécessite l'utilisation d'un engin de manutention afin de les amener au niveau de la paroi de pose située en hauteur. L'utilisation simultanée d'un véhicule d'élévation et d'un engin de manutention rend l'opération de pose de ces plaques délicate et longue à mener à bien. Cette opération de pose s'avère d'autant plus longue qu'elle nécessite des changements fréquents de position du véhicule pour accéder aux différentes zones de la paroi du tunnel. Le positionnement de la nacelle est d'autant plus délicat à assurer qu'il doit tenir compte des variations de hauteur susceptibles d'intervenir entre la chaussée et la paroi de pose et des variations de pente de la chaussée et/ou de la paroi de pose.

Dans l'état de la technique, il est connu par exemple, par les documents JP 04 325 384 et FR 2 705 630 un véhicule permettant de maintenir une plateforme horizontale quelles que soient les conditions de roulement du véhicule. Le véhicule comporte un châssis roulant équipé d'un bâti de support de la plateforme reliée par des moyens d'articulation, à des moyens de déplacement permettant une inclinaison relative entre le bâti de support et la plateforme aussi bien dans le plan longitudinal que le plan transversal.

Toutefois, une telle solution ne permet pas d'une part d'élever en toute sécurité des personnes à une hauteur déterminée à laquelle elles sont à même d'être supportées par un plancher restant horizontal quelque soient les variations de hauteur de la paroi de travail ou de pente de la chaussée et/ou de la paroi de travail et d'autre part, de permettre la manutention simple et en toute sécurité, d'objets lourds et encombrants.

L'objet de l'invention vise donc à remédier aux inconvénients de l'art antérieur en proposant un véhicule offrant en toute sécurité, une plateforme de travail de surface relativement importante restant horizontale quelque soient les variations de pente de la chaussée et/ou de la paroi de travail et des variations de la hauteur de la paroi de travail par rapport au sol, cette plateforme de travail en restant horizontale offrant la possibilité d'être utilisée comme une surface de roulement pour un engin de manipulation d'objets lourds et/ou encombrants.

L'objet de l'invention vise donc un véhicule d'élévation de personnes travaillant en hauteur comportant :
- un châssis déplaçable équipé d'un bâti de support d'une plateforme de travail relié à des moyens d'articulation permettant une inclinaison relative entre le bâti de support et la plateforme de travail, dans le plan longitudinal et dans le plan transversal de la plateforme,
- et des moyens moteurs pour assurer l'inclinaison relative entre le bâti de support et la plateforme de travail, dans le plan longitudinal et dans le plan transversal de manière à maintenir à l'horizontal la plateforme de travail.

Selon l'invention, la plateforme de travail comporte un plancher monté sur un berceau relié par les moyens d'articulation à des moyens de guidage en déplacement vertical s'élevant à partir du bâti et en ce que les moyens moteurs assurent la montée et la descente par rapport au bâti, du berceau guidé en coulissement vertical par les moyens de guidage.

Le véhicule d'élévation selon l'invention présente ainsi un plancher avec une grande surface restant toujours horizontale, en étant toujours guidé en coulissement vertical permettant de constituer une surface de déambulation pour le personnel et une surface de roulement pour divers engins.

Afin d'augmenter la surface d'un tel plancher, le véhicule d'élévation selon l'invention comporte selon une variante préférée de réalisation, une plateforme de travail équipée de moyens de guidage, selon le plan transversal, du plancher par rapport au berceau et de moyens moteurs permettant de déplacer le plancher par rapport au berceau, selon le plan transversal.

De manière classique, la plateforme de travail est équipée sur son pourtour, de barrières de sécurité qui délimitent une zone de déchargement de produits et une zone d'accès pour le personnel.

Selon une variante préférée de réalisation, les moyens moteurs assurant la montée, la descente et l'inclinaison relative entre le berceau et le bâti comportent au moins trois et de préférence quatre vérins disposés symétriquement de part et d'autre du berceau en étant reliés chacun au bâti par un système articulé.

Selon une variante préférée de réalisation, les moyens de guidage en déplacement vertical comportent au moins deux colonnes de guidage s'élevant du bâti en étant situés aux extrémités de la plateforme de travail de guidage, un coulisseau étant monté dans chaque colonne, en étant relié à une extrémité du berceau par les moyens d'articulation.

Avantageusement, chaque extrémité du berceau comporte, en tant que moyens d'articulation, un axe de pivotement longitudinal afin d'assurer l'inclinaison relative dans le plan transversal et un axe de pivotement transversal afin d'assurer l'inclinaison relative dans le plan longitudinal.

Le véhicule d'élévation selon l'invention comporte avantageuseument une centrale de commande équipée notamment de moyens pour déterminer l'horizontalité du plancher permettant de piloter les moyens moteurs assurant la montée, la descente et l'inclinaison de manière que le plancher occupe toujours une position horizontale.

De préférence, le véhicule d'élévation comporte un groupe électrogène et une centrale hydraulique reliée aux vérins, disposés entre le châssis roulant et le bâti de support.

Avantageusement, le châssis déplaçable est pourvu à l'une de ses extrémités d'un escalier d'accès au plancher.

D'une manière avantageuse, le véhicule d'élévation selon l'invention comporte un châssis déplaçable du type motorisé ou non et se trouve équipé de moyens de stabilisation.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en coupe élévation schématique d'un exemple de réalisation d'un véhicule d'élévation conforme à l'invention dont la plateforme de travail est en position basse.
La **Figure 2** est une vue en coupe transversale du véhicule d'élévation illustré à la Fig. 1.
La **Figure 3** est une vue analogue à la Fig. 1, d'un véhicule dont la plateforme de travail est dans une position haute.
La **Figure 4** illustre le véhicule d'élévation dans une position caractéristique permettant d'illustrer une caractéristique de l'objet de l'invention.
Les **Figures 5** et **6** sont des vues des détails respectivement V et VI du véhicule d'élévation conforme à l'invention illustrée à la Fig. 1.
La **Figure 7** illustre le véhicule d'élévation dans une autre position caractéristique.

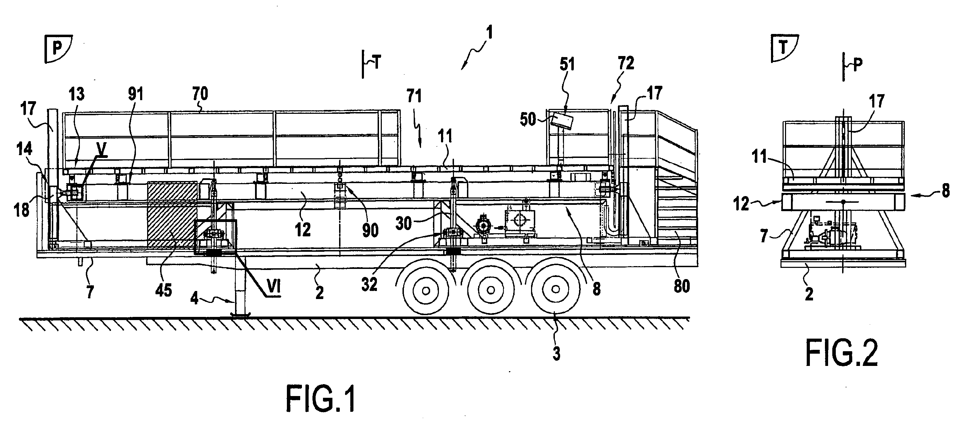

Tel que cela ressort plus précisément des **Fig. 1** et **2****,** l'objet de l'invention concerne un véhicule **1** permettant d'élever des personnes devant travailler en hauteur. Ce véhicule **1** comporte un châssis déplaçable **2** du type motorisé ou non. Dans l'exemple illustré, le véhicule est une remorque dont le châssis roulant **2** est équipé d'un train de roues **3.** Bien entendu, il peut être envisagé que le véhicule **1** selon l'invention soit un véhicule motorisé, terrestre, ferroviaire voire maritime.

De manière classique, le véhicule **1** comporte des moyens de stabilisation ou de béquillage **4** de tout type connu en soi permettant de placer le châssis roulant dans une position stable fixe. Par exemple, le véhicule présente une largeur ou un encombrement égal à 2,40 mètres et une longueur comprise entre 10. et 15 mètres, et de préférence de l'ordre de 13 mètres.

Le châssis roulant **2** est équipé d'un bâti **7** de support d'une plateforme de travail **8** pour une ou plusieurs personnes. Le bâti de support **7** est fixé par tous moyens appropriés sur le châssis roulant **2.** Il doit être compris que le bâti de support **7** est directement réalisé sur un châssis roulant **2** ou est rapporté sur un tel châssis roulant **2.**

La plateforme de travail **8** comporte un plancher **11** monté sur un berceau **12** relié par des moyens d'articulation **13,** à des moyens de guidage en déplacement vertical **14.**

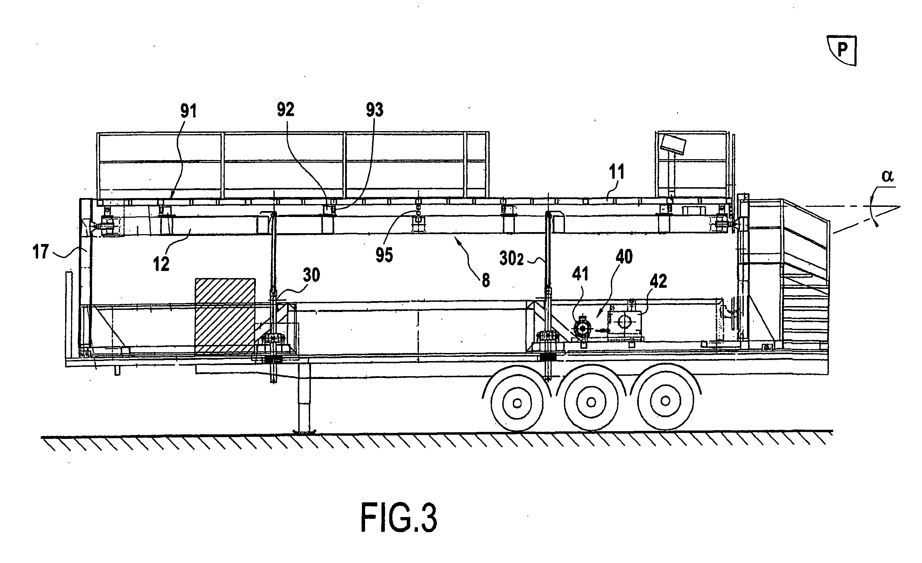

Selon une caractéristique préférée de l'invention illustrée aux **Fig. 1** et **2****,** la plateforme de travail **8** s'étend, en position basse, à distance par rapport au châssis roulant **2** de manière à délimiter un volume de rangement ou de positionnement de divers organes comme cela sera expliqué dans la suite de la description. La plateforme de travail **8** s'étend ainsi sur toute la largeur du véhicule et sur pratiquement toute la longueur du châssis roulant **2.** Il doit être compris que la plateforme de travail **8** est guidée en déplacement vertical par les moyens **14** de manière à pouvoir passer d'une position basse illustrée aux **Fig. 1** et **2** à une position haute illustrée à la **Fig. 3** et réciproquement.

Selon une caractéristique préférée de réalisation, les moyens de guidage en déplacement vertical **14** comportent au moins deux et de préférence deux colonnes ou piliers de guidage **17** faisant partie du bâti **7** et s'élevant verticalement en étant situés aux extrémités de la plateforme de travail **8.** Tel que cela ressort plus précisément de la **Fig. 2****,** les deux colonnes de guidage **17** s'étendent dans le plan de symétrie longitudinal **P** du bâti de support **7.** Chaque colonne de guidage **17** est destinée à recevoir un coulisseau **18** monté pour être guidé en déplacement vertical à l'intérieur de la colonne de guidage **17.** La plateforme de travail **8** est donc guidée en coulissement vertical par les moyens de guidage **14.**

Chaque coulisseau **18** est relié au berceau **12** à l'aide des moyens d'articulation **13** qui permettent une inclinaison relative entre la plateforme de travail **8** et le bâti **7,** dans le plan longitudinal de symétrie **P** et dans le plan transversal **T** du bâti. Le plan longitudinal **P** est considéré comme parallèle au sens de circulation du véhicule tandis que le plan transversal **T** est le plan vertical perpendiculaire au plan longitudinal **P.**

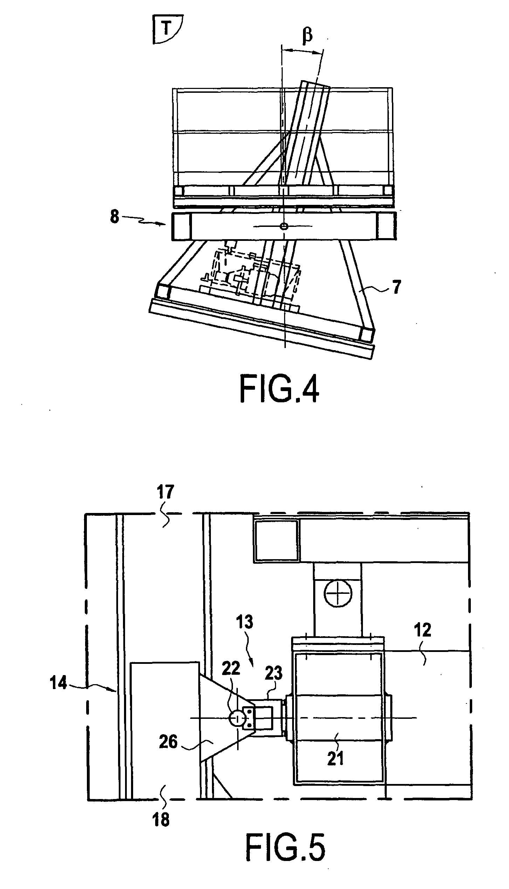

Les moyens d'articulation **13** présentent ainsi au moins deux degrés de liberté en rotation autour de deux axes perpendiculaires, avec une possibilité limitée de translation dans le plan longitudinal **P** pour permettre l'inclinaison relative entre la plateforme de travail **8** et le bâti de support **7.** Ainsi, la plateforme de travail **8** est articulée par rapport au bâti de support **7** autour d'une part d'un axe longitudinal pour obtenir dans le plan transversal **T** (Fig. 4), un pivotement relatif d'un angle β entre la plateforme de travail **8** et le bâti de support **7** et d'autre part, d'un axe transversal pour obtenir dans le plan longitudinal **P** (Fig. 3) un pivotement relatif d'un angle α entre la plateforme de travail **8** et le bâti de support **7.** Par exemple, l'angle d'inclinaison α dans le plan longitudinal **P** représenté à la **Fig. 3** entre la plate forme de travail **8** et le bâti de support **7** peut atteindre une valeur de l'ordre de 3°. L'angle d'inclinaison β dans le plan transversal **T** entre la plateforme de travail **8** et le bâti de support **7** peut atteindre une valeur de l'ordre de 3°.

Selon un exemple de réalisation illustré plus particulièrement à la **Fig. 5****,** chaque extrémité du berceau **12** comporte en tant que moyens d'articulation **13,** d'une part un axe de pivotement longitudinal **21** afin d'assurer l'inclinaison relative, dans le plan transversal **T,** entre la plateforme de travail **8** et le bâti de support **7** et d'autre part, un axe de pivotement transversal **22** afin d'assurer l'inclinaison relative dans le plan longitudinal **P** entre la plateforme de travail **8** et le bâti de support **7.** Les moyens d'articulation **13** du type joint de cardan par exemple permettent ainsi une inclinaison relative entre la plateforme de travail **8** et le bâti de support **7.** Par exemple, chaque axe de pivotement longitudinal **21** est monté à une extrémité du berceau **12** en ayant un prolongement **23** monté articulé sur l'axe de pivotement transversal **22** porté par une chape **26** s'étendant à partir du coulisseau **18.** Les axes de pivotement longitudinaux **21** s'étendent ainsi de manière coaxiale dans le plan longitudinal de manière à autoriser un pivotement autour de l'axe longitudinal de la plateforme de travail **8.** Les axes de pivotement transversaux **22** s'étendent de manière parallèle à chacune des extrémités de la plateforme de travail permettant un basculement relatif entre les deux extrémités du bâti de support **7.**

Le véhicule **1** selon l'invention comporte également des moyens moteurs **30** pour assurer la montée et la descente du berceau **12** par rapport au bâti de support **7** et l'inclinaison relative entre le bâti de support **7** et la plateforme de travail **8,** dans le plan longitudinal **P** et dans le plan transversal **T.** Ces moyens moteurs **30** agissent sur la plateforme de travail **8** pour placer dans une position souhaitée, cette plateforme de travail qui est reliée par les moyens d'articulation **13,** aux moyens de guidage en déplacement vertical **14.** Ces moyens moteurs **30** permettent ainsi d'assurer le positionnement du berceau **12** dans une position basse jusqu'à une position haute (Fig. 3) ainsi que dans toute position intermédiaire entre ces deux positions extrêmes. Ces moyens moteurs **30** permettent également de pouvoir régler l'assiette de la plateforme de travail **8** par rapport au bâti du support **7** en vue de maintenir la plateforme de travail **8** dans une position horizontale. A cet effet, les moyens moteurs **30** agissent pour permettre une inclinaison du bâti de support **7** par rapport à la plateforme de travail **8** maintenue en position horizontale, lorsqu'il apparaît des variations de pente de la chaussée et/ou de la paroi de travail, ou des variations de hauteur entre la chaussée et la paroi de travail.

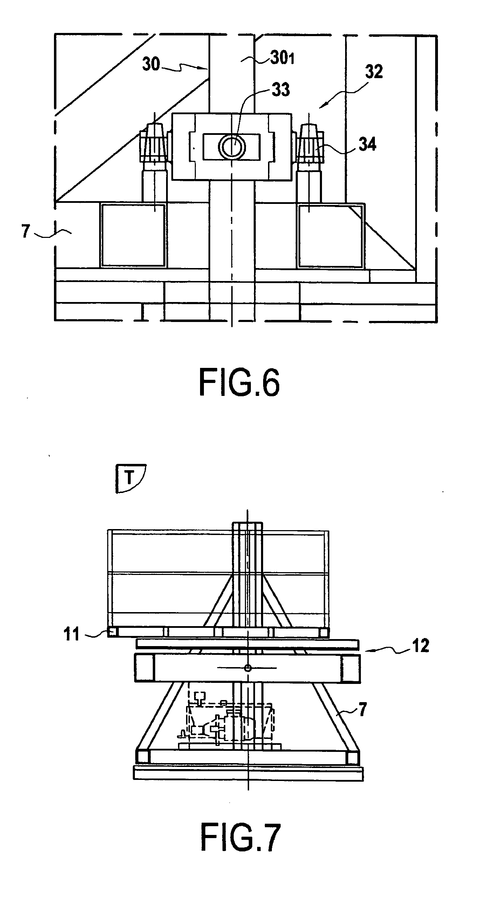

Selon une caractéristique de réalisation, les moyens moteurs **30** sont indépendants des moyens d'articulation **13** et des moyens de guidage **14.** Avantageusement, les moyens moteurs **30** sont réalisés par au moins trois et de préférence quatre vérins disposés symétriquement de part et d'autre du berceau en étant reliés chacun au bâti de support **7** par un système articulé **32.** Le système articulé **32** présente au moins deux degrés de liberté en rotation autour de deux axes perpendiculaires. Dans l'exemple de réalisation illustré plus particulièrement à la **Fig. 6****,** chaque système articulé **32** comporte un axe de pivotement transversal **33** et un axe de pivotement longitudinal **34** pour le corps **30₁** du vérin dont la tige **30₂** est relié au berceau **12** par une articulation. Bien entendu, les moyens moteurs **30** peuvent être réalisés de manière différente. Ainsi, les vérins peuvent être remplacés par tout autre système d'élévation du type câble, poulie, crémaillère, etc.

De préférence, ces vérins sont du type hydraulique et sont reliés à une centrale hydraulique **40** comportant une pompe **41** associée à une bâche d'huile **42.** Avantageusement, la centrale hydraulique **40** est disposée entre le châssis **2** et le bâti de support **7.** Avantageusement, le véhicule **1** est autonome et comporte à cet effet un groupe électrogène **45** porté par le bâti **7** en s'étendant en dessous de la plateforme de travail **8**.

Le véhicule **1** comporte également une centrale de commande **50** permettant de piloter le fonctionnement des vérins **30.** La centrale de commande **50** comporte un pupitre de commande **51** placé avantageusement sur le plancher **11.** Cette centrale de commande **50** comporte avantageusement des moyens pour déterminer l'horizontalité du plancher **11** et diverses sécurités. Cette centrale de commande **50** permet de piloter les vérins **30** de manière que le plancher **11** occupe toujours une position horizontale quelque soit la position du bâti de support **7.**

De façon classique, le plancher **11** est équipé sur son pourtour, de barrières de sécurité **70** qui sont placées de manière à délimiter une zone de déchargement **71** de produits ou d'objets ainsi qu'une zone d'accès **72** pour le personnel. Sur une partie de la longueur de la plateforme de travail, des barrières de sécurité **70** peuvent être temporairement retirées de la zone de déchargement **71** de manière à permettre le chargement de produits sur le plancher **11.** De préférence, le plancher **11** s'ouvre à l'une des extrémités entre la colonne de guidage **17** et le côté latéral, sur un escalier **80** monté sur le châssis roulant **2** entre l'extrémité de ce dernier et la colonne de guidage **17.** Une porte non représentée est destinée à assurer la continuité des barrières de sécurité **70.**

Selon une caractéristique préférée de réalisation, la plateforme de travail **8** est montée de manière à pouvoir être déplacée par rapport au bâti de support **7** selon le plan transversal **T** (Fig. 7). La plateforme de travail **8** est ainsi équipée de moyens de guidage **91** du plancher **11** selon la direction transversale par rapport au berceau **12.** A cet effet, le berceau de guidage **12** est équipé de rails de guidage transversaux **92** coopérant avec des galets **93** portés par la face inférieure du plancher **11.** La plateforme de travail **8** comporte également des moyens moteurs de déplacement **95** tels que des vérins permettant de déplacer latéralement le plancher **11** de préférence dans les deux sens du plan transversal **T.** Ainsi, il peut être prévu d'autoriser un déplacement latéral du plancher **11** des deux côtés du berceau **12** selon une mesure par exemple égale à 1 mètre. Il s'ensuit que la surface de travail peut ainsi être augmentée de deux mètres sur les deux côtés du véhicule sans déplacement du véhicule.

Le véhicule **1** selon l'invention présente l'avantage de pouvoir disposer d'un plancher avec une grande surface restant toujours horizontale permettant de constituer une surface de roulement pour divers engins notamment de manutention de pièces lourdes et/ou encombrantes à poser.

L'invention n'est pas limitée aux exemples décrits et représentés car diverses modifications peuvent y être apportées sans sortir de son cadre.

## Revendications

1. Véhicule d'élévation de personnes travaillant en hauteur comportant :
- un châssis déplaçable **(2)** équipé d'un bâti **(7)** de support d'une plateforme de travail **(8)** relié à des moyens d'articulation **(13)** permettant une inclinaison relative entre le bâti de support et la plateforme de travail, dans le plan longitudinal **(P)** et dans le plan transversal **(T)** de la plateforme,
- et des moyens moteurs **(30)** pour assurer l'inclinaison relative entre le bâti de support **(7)** et la plateforme de travail **(8),** dans le plan longitudinal **(P)** et dans le plan transversal **(T)** de manière à maintenir à l'horizontal la plateforme de travail **(8), caractérisé en ce que** la plateforme de travail **(8)** comporte un plancher **(11)** monté sur un berceau **(12)** relié par les moyens d'articulation **(13)** à des moyens de guidage en déplacement vertical **(14)** s'élevant à partir du bâti **(7)** et **en ce que** les moyens moteurs **(30)** assurent la montée et la descente par rapport au bâti **(7),** du berceau **(12)** guidé en coulissement vertical par les moyens de guidage **(14).**

2. Véhicule d'élévation selon la revendication 1, **caractérisé en ce que** la plateforme de travail **(8)** est équipée de moyens de guidage **(91),** selon le plan transversal, du plancher **(11)** par rapport au berceau **(9)** et de moyens moteurs **(95)** permettant de déplacer le plancher **(11)** par rapport au berceau **(9),** selon le plan transversal **(T).**

3. Véhicule d'élévation selon la revendication 1 ou 2, **caractérisé en ce que** la plateforme de travail **(8)** est équipée sur son pourtour, de barrières de sécurité **(70)** qui délimitent une zone de déchargement **(71)** de produits et une zone d'accès **(72)** pour le personnel.

4. Véhicule d'élévation selon la revendication 1, **caractérisé en ce que** les moyens moteurs **(30)** assurant la montée, la descente et l'inclinaison relative entre le berceau et le bâti comportent au moins trois et de préférence quatre vérins disposés symétriquement de part et d'autre du berceau en étant reliés chacun au bâti par un système articulé **(32).**

5. Véhicule d'élévation selon la revendication 1, **caractérisé en ce que** les moyens de guidage en déplacement vertical **(14)** comportent au moins deux colonnes de guidage s'élevant du bâti en étant situés aux extrémités de la plateforme de travail de guidage, un coulisseau **(18)** étant monté dans chaque colonne **(17),** en étant relié à une extrémité du berceau **(12)** par les moyens d'articulation **(13).**

6. Véhicule d'élévation selon la revendication 1 ou 5, **caractérisé en ce que** chaque extrémité du berceau **(12)** comporte, en tant que moyens d'articulation **(13),** un axe de pivotement longitudinal **(21)** afin d'assurer l'inclinaison relative dans le plan transversal et un axe de pivotement transversal **(22)** afin d'assurer l'inclinaison relative dans le plan longitudinal.

7. Véhicule d'élévation selon l'une des revendications 1 à 6, **caractérisé en ce qu'**il comporte une centrale de commande **(50)** équipée notamment de moyens pour déterminer l'horizontalité du plancher **(11)** permettant de piloter les moyens moteurs **(30)** assurant la montée, la descente et l'inclinaison de manière que le plancher **(11)** occupe toujours une position horizontale.

8. Véhicule d'élévation selon la revendication 4, **caractérisé en ce qu'**il comporte un groupe électrogène **(45)** et une centrale hydraulique **(40)** reliée aux vérins **(30)** disposés entre le châssis roulant **(2)** et le bâti de support **(7).**

9. Véhicule d'élévation selon la revendication 1, **caractérisé en ce que** le châssis déplaçable **(2)** est pourvu à l'une de ses extrémités d'un escalier d'accès **(80)** au plancher **(11).**

10. Véhicule d'élévation selon l'une des revendications 1 à 9, **caractérisé en ce que** le châssis déplaçable **(2)** est du type motorisé ou non et se trouve équipé de moyens de stabilisation **(4).**

## Claims

1. A lifting vehicle for lifting people working at height, the vehicle comprising:
- a movable chassis (2) fitted with a support structure (7) for supporting a work platform (8), the support structure being connected to hinge means (13) enabling it to be tilted relative to the work platform in the longitudinal plane (P) and in the transverse plane (T) of the platform; and
- drive means (30) for tilting the support structure (7) relative to the work platform (8) in the longitudinal plane (P) and in the transverse plane (T) in such a manner as to keep the work platform (8) horizontal,
the vehicle being **characterized in that** the work platform (8) comprises a floor (11) mounted on a cradle (12) connected by the hinge means (13) to vertical movement guide means (14) extending from the support structure (7), and
**in that** the drive means (30) raise and lower the cradle (12) relative to the support structure (7), the cradle (12) being guided in vertical sliding by the guide means (14).

2. A lifting vehicle according to claim 1, **characterized in that** the work platform (8) is fitted with guide means (91) for guiding the floor (11) in the transverse plane relative to the cradle (9), and drive means (95) enabling the floor (11) to be moved relative to the cradle (9) in the transverse plane (T).

3. A lifting vehicle according to claim 1 or claim 2, **characterized in that** the work platform (8) is fitted around its periphery with safety barriers (70) defining a unloading zone (71) for unloading equipment, and an access zone (72) for personnel.

4. A lifting vehicle according to claim 1, **characterized in that** the drive means (30) for raising, lowering, and tilting the cradle relative to the support structure include at least three, and preferably four, actuators disposed symmetrically on either side of the cradle, each being connected to the support structure by a hinged system (32).

5. A lifting vehicle according to claim 1, **characterized in that** the vertical movement guide means (14) comprise at least two guide columns extending upwards from the support structure, being situated at the ends of the guided work platform, a slider (18) being mounted in each column (17), and being connected to one end of the cradle (12) by the hinge means (13).

6. A lifting vehicle according to claim 1 or claim 5, **characterized in that** each end of the cradle (12) includes, by way of hinge means (13), a longitudinal pivot shaft (21) for enabling relative tilting in the transverse plane, and a transverse pivot shaft (22) for enabling relative tilting in the longitudinal plane.

7. A lifting vehicle according to any one of claims 1 to 6, **characterized in that** it includes a control unit (50) fitted in particular with means for determining the horizontality of the floor (11) and serving to control the drive means (30) that provide lifting, lowering, and tilting in such a manner that the floor (11) always occupies a horizontal position.

8. A lifting vehicle according to claim 4, **characterized in that** it includes an electricity generator unit (45) and a hydraulic unit (40) connected to the actuators (30) located between the wheeled chassis (2) and the support structure (7).

9. A lifting vehicle according to claim 1, **characterized in that** the movable chassis (2) is provided at one of its ends with a stair (80) giving access to the floor (11).

10. A lifting vehicle according to any one of claims 1 to 9, **characterized in that** the movable chassis (2) is optionally of the self-propelled type and is fitted with stabilizer means (4).

## Patentansprüche

1. Hubfahrzeug für in der Höhe arbeitende Personen, umfassend:
- ein verfahrbares Gestell (2), das mit einem Rahmen (7) zum Tragen einer Arbeitsbühne (8) ausgestattet ist, der mit Gelenkmitteln (13) verbunden ist, die eine Relativneigung zwischen dem Tragrahmen und der Arbeitsbühne in der Längsebene (P) und in der Querebene (T) der Bühne ermöglichen, und
- Antriebsmittel (30), um die Relativneigung zwischen dem Tragrahmen (7) und der Arbeitsbühne (8) in der Längsebene (P) und in der Querebene (T) sicherstellen, so daß die Arbeitsbühne (8) in der Horizontalen gehalten wird, **dadurch gekennzeichnet, daß** die Arbeitsbühne (8) einen Boden (11) umfaßt, der auf einem Sattel (12) angebracht ist, welcher über die Gelenkmittel (13) mit Mitteln zur Vertikalbewegungsführung (14), die von dem Rahmen (7) aus nach oben verlaufen, verbunden ist, und daß die Antriebsmittel (30) das Hoch- und Herunterfahren des Sattels (12), der durch die Führungsmittel (14) vertikal verschiebbar geführt ist, gegenüber dem Rahmen (7) sicherstellen.

2. Hubfahrzeug nach Anspruch 1, **dadurch gekennzeichnet, daß** die Arbeitsbühne (8) mit Mitteln zum Führen (91) des Bodens (11) gegenüber dem Sattel (12) in der Querebene und mit Antriebsmitteln (95), die ermöglichen, den Boden (11) gegenüber dem Sattel (12) in der Querebene (T) zu bewegen, ausgestattet ist.

3. Hubfahrzeug nach Anspruch 1 oder 2, **dadurch gekennzeichnet, daß** die Arbeitsbühne (8) an ihrem Umfang mit Sicherheitsbarrieren (70) ausgestattet ist, die einen Bereich zum Abladen (71) von Produkten und einen Zugangsbereich (72) für das Personal begrenzen.

4. Hubfahrzeug nach Anspruch 1, **dadurch gekennzeichnet, daß** die Antriebsmittel (30), die das Hochfahren, das Herunterfahren und die Relativneigung zwischen dem Sattel und dem Rahmen sicherstellen, wenigstens drei und vorzugsweise vier Zylinder umfassen, die auf beiden Seiten des Sattels symmetrisch angeordnet und dabei jeweils über ein Gelenksystem (32) mit dem Rahmen verbunden sind.

5. Hubfahrzeug nach Anspruch 1, **dadurch gekennzeichnet, daß** die Mittel zur Vertikalbewegungsführung (14) wenigstens zwei Führungssäulen umfassen, die an den Enden der Führungsarbeitsbühne gelegen von dem Rahmen aus nach oben verlaufen, wobei ein Schieber (18) in jeder Säule (17) angebracht und dabei über die Gelenkmittel (13) mit einem Ende des Sattels (12) verbunden ist.

6. Hubfahrzeug nach Anspruch 1 oder 5, **dadurch gekennzeichnet, daß** jedes Ende des Sattels (12) als Gelenkmittel (13) eine Längsschwenkachse (21), um die Relativneigung in der Querebene sicherzustellen, sowie eine Querschwenkachse (22), um die Relativneigung in der Längsebene sicherzustellen, umfaßt.

7. Hubfahrzeug nach einem der Ansprüche 1 bis 6, **dadurch gekennzeichnet, daß** es eine Steuerzentrale (50) umfaßt, die insbesondere mit Mitteln zum Festlegen der Horizontallage des Bodens (11) ausgestattet ist, die ermöglichen, die Antriebsmittel (30), die das Hochfahren, das Herunterfahren und die Relativneigung sicherstellen, derart zu steuern, daß der Boden (11) stets eine horizontale Position einnimmt.

8. Hubfahrzeug nach Anspruch 4, **dadurch gekennzeichnet, daß** es einen Stromerzeuger (45) und ein hydraulisches Antriebsaggregat (40) umfaßt, das mit den zwischen dem fahrbaren Gestell (2) und dem Tragrahmen (7) angeordneten Zylindern (30) verbunden ist.

9. Hubfahrzeug nach Anspruch 1, **dadurch gekennzeichnet, daß** das verfahrbare Gestell (2) an einem seiner Enden mit einer Treppe (80) für den Zugang zu dem Boden (11) ausgestattet ist.

10. Hubfahrzeug nach einem der Ansprüche 1 bis 9, **dadurch gekennzeichnet, daß** das verfahrbare Gestell (2) von der Art motorisiert oder nicht motorisiert ist und mit Stabilisierungsmitteln (4) ausgestattet ist.
